# EUROPÄISCHE PATENTSCHRIFT

(11) **EP 2 615 719 B1**
(45) Veröffentlichungstag und Bekanntmachung des Hinweises auf die Patenterteilung: **22.02.2017**
(21) Anmeldenummer: 12008432.2
(22) Anmeldetag: 19.12.2012
(51) Int. Cl.: H02J 13/00, H04L 12/28

(54) **WLAN-fähiges Unterputz-Elektro-Installationsgerät**
WLAN-capable built-in electrical installation device
Appareil d'installation électrique encastré WLAN

(30) Priorität: 12.01.2012 DE 102012000380
(43) Veröffentlichungstag der Anmeldung: 17.07.2013
(73) Patentinhaber: ABB AG, 68309 Mannheim (DE)
(72) Erfinder: Quittmann, Olaf, 59846 Sundern (DE); Dehlen, Sascha, 58540 Meinerzhagen (DE); Schäder, Manfred, 81737 München (DE)

(56) Entgegenhaltungen:
- EP-A1- 1 936 968
- EP-A2- 2 279 894
- DE-A1- 4 312 613
- DE-A1-102009 050 171
- DE-B3-102010 032 712
- DE-U1-202007 017 558

## Beschreibung

Die Erfindung bezieht sich auf ein System mit Smartphone/Smartpad/Tablet-PC und WLAN-fähigen Unterputz-Elektro-Installationsgerät mit einem Unterputz-Gerätesockel inklusive eines Spannungs- und Verbraucheranschlussblocks für die Verbindung mit einem 230V-Wechselspannungsnetz und mit einem anzusteuernden elektrischen Verbraucher und mit einer Abdeckung inklusive Bedienteil zur händischen Ansteuerung des elektrischen Verbrauchers.

Derartige Unterputz-Elektro-Installationsgeräte entsprechen dem allgemeinen Standard in Gebäuden und dienen beispielsweise zum Schalten und Dimmen von Leuchten und zum Ansteuern von Jalousien.

Die DE 102009050171 A1 zeigt eine WLAN-fähige Multifunktionseinheit eines Hausautomatisierungs- und Hausinformationssystems, welche in vorhandenen Unterputzdosen installierbar ist.

Aus der EP 2279894 A2 ist eine Ladesteckdose zur Aufladung eines Elektroautos in Unterputz-Ausführung bekannt, wobei eine Datenübertragung zwischen der Ladesteckdose respektive dem Fahrzeug und der Haus- und Gebäudetechnik über WLAN beschrieben ist.

Der Erfindung liegt die Aufgabe zugrunde, ein Unterputz-Elektro-Installationsgerät der eingangs genannten Art zu schaffen, das über den allgemeinen Standard hinausgehende erweiterte Funktionen aufweist.

Diese Aufgabe wird erfindungsgemäß gelöst durch ein System mit Smartphone/Smartpad/Tablet-PC und WLAN-fähigen Unterputz-Elektro-Installationsgerät mit einem Unterputz-Gerätesockel inklusive Spannungs-und Verbraucheranschlussblock für die Verbindung mit einem 230V-Wechselspannungsnetz und mit einem anzusteuernden elektrischen Verbraucher und mit einer Abdeckung inklusive Bedienteil zur händischen Ansteuerung des elektrischen Verbrauchers,
- wobei in der Zentralscheibe eine Ansteuer-/Verarbeitungs-/Speichereinrichtung, ein WLAN-Funk-Sender/Empfänger und eine Funk-Antenne integriert sind,
- wobei im Unterputz-Gerätesockel ein Aktor zur Ansteuerung des elektrischen Verbrauchers und ein Netzteil zur Energieversorgung der Ansteuer-/Verarbeitungs-/Speichereinrichtung und des WLAN-Funk-Sender/Empfängers integriert sind,
- wobei der Unterputz-Gerätesockel und die Ansteuer-/Verarbeitungs-/Speichereinrichtung über eine elektrische Kontaktierungsvorrichtung miteinander verbunden sind
- und wobei die Voraussetzung für eine ferngesteuerte Ansteuerung des elektrischen Verbrauchers über ein Smartphone / Smartpad / Tablet-PC mit installierter Applikation über eine Funk-Verbindung zum WLAN-Funk-Sender/Empfänger geschaffen ist.

Die mit der Erfindung erzielbaren Vorteile bestehen insbesondere darin, dass das vorgeschlagene System mit Smartphone/Smartpad/Tablet-PC und WLAN-fähigen Unterputz-Elektro-Installationsgerät von jedem Elektro-Installateur auch ohne spezielle Kenntnisse in der Gebäudesystemtechnik installiert werden kann. Dabei ist insbesondere eine Nachrüstung / Umrüstung von bestehenden Installationen einfach möglich. Der Endkunde erhält einen Mehrwert seiner Elektro-Installation durch die zusätzliche Ansteuerungsmöglichkeit respektive Fernbedienbarkeit mit Hilfe seines Smartphones / Smartpads / Tablet-PCs. Dabei ist bezüglich des Smartphones / Smartpads / Tablet-PCs eine eigene Namensgebung der Funktionen Schalten und Dimmen von elektrischen Verbrauchern durch den Endkunden möglich. Der Endkunde kann bei seinem Smartphone / Smartpad / Tablet-PC eigenständig Raumstrukturen anlegen. Der Endkunde kann des Weiteren eigenständig höhere Funktionen ohne Installationsaufwand, wie zusätzliche Kabel oder Tools, bei seinem Smartphone / Smartpad / Tablet-PC einrichten, wie:
- eigene Bildung von Gruppen-/Zentralbefehlen, z. B. ein Gruppenbefehl schaltet mehrere Leuchten gleichzeitig ein oder aus, respektive steuert mehrere Jalousien gleichzeitig an;
- eigene Bildung von Szenen respektive Lichtszenen mit der Möglichkeit, diese jederzeit verändern zu können, z. B. gleichzeitiges oder sukzessiv aufeinanderfolgendes Dimmen unterschiedlicher Leuchten in unterschiedlicher Weise.

Vorzugsweise ist die Abdeckung in Form einer Zentralscheibe mit einem Abdeckrahmen ausgeführt. Das WLAN-fähige Unterputz-Elektro-Installationsgerät kann dann mit beliebigen Komponenten eines konventionellen Installationsgeräte-Programms für Steckdosen / Schalter / Taster / Dimmer kombiniert werden, desgleichen wird ein konventioneller Abdeckrahmen dieses konventionellen Installationsgeräte-Programms eingesetzt. Unter konventionellen Installationsgeräte-Programmen werden dabei Programme verstanden, wie sie von zahlreichen Installationsgeräte-Herstellern vertrieben werden und verschiedene Wippschalter-Einsätze, Wipptaster-Einsätze, Dimmer-Einsätze, Steckdosen-Einsätze sowie Wippen und Abdeckrahmen 1fach, 2fach, 3fach, 4fach in bestimmtem Design und bestimmten Farben beinhalten.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: einen seitlichen Schnitt durch ein WLAN-fähiges Unterputz-Elektro-Installationsgerät,
- Fig. 2: eine Sicht auf ein WLAN-fähiges Unterputz-Elektro-Installationsgerät,
- Fig. 3: eine Skizze zur Erläuterung der elektrischen Funktion des Systems "WLAN-fähiges Unterputz-Elektro-Installationsgerät + Smartphone / Smartpad / Tablet-PC + elektrischer Verbraucher".

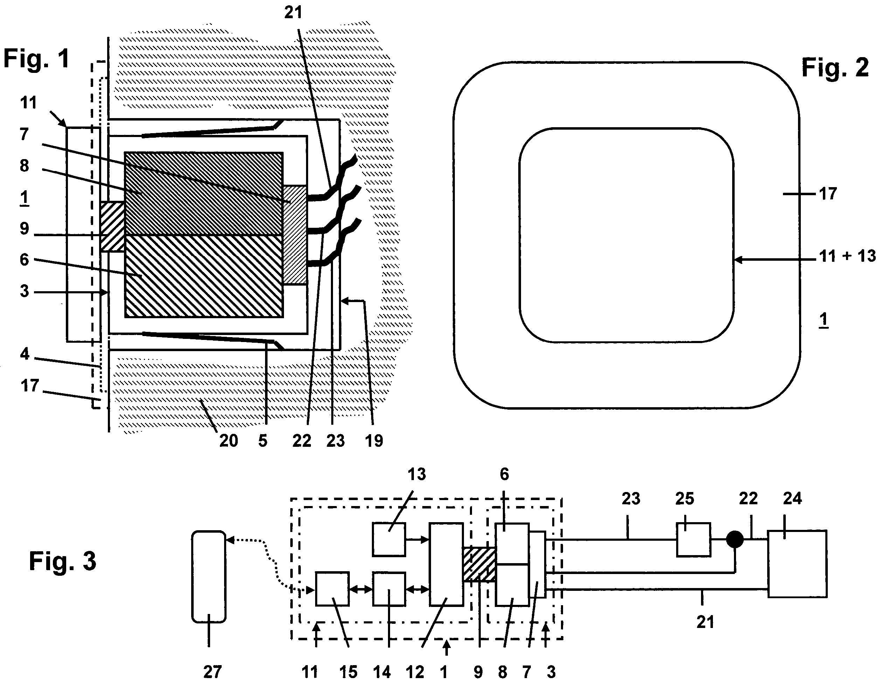

In Fig. 1 ist ein seitlicher Schnitt durch ein WLAN-fähiges Unterputz-Elektro-Installationsgerät dargestellt. Das WLAN-fähige Unterputz-Elektro-Installationsgerät 1 weist als Hauptkomponenten einen Unterputz-Gerätesockel (Elektronikeinsatz) 3, eine Zentralscheibe 11 und einen Abdeckrahmen 17 auf, wobei die elektrische Verbindung zwischen dem Unterputz-Gerätesockel 3 einerseits und der Zentralscheibe 11 andererseits über eine elektrische Kontaktierungsvorrichtung 9 erfolgt. Alternativ werden Zentralscheibe und Abdeckrahmen durch eine rahmenlose Abdeckung (aus einem Stück) realisiert. Der Unterputz-Gerätesockel 3 ist, wie allgemein bei Unterputz-Gerätesockeln üblich, mit einem Tragring 4 sowie (optional) mit Spreizen 5 versehen, um derart die Montage in einer handelsüblichen, normgerechten UP-Gerätedose 19 zu ermöglichen, welche in einer Wand 20 installiert ist. Im Innenraum des Unterputz-Gerätesockels 3 sind als wesentliche Baukomponenten ein Aktor 6, beispielsweise ein Relais oder ein Dimmer, ein Netzteil 8 sowie ein Spannungs- und Verbraucheranschlussblock 7 vorhanden, so dass ein Phasenleiter 21 und der Nulleiter 22 eines 230V-Wechselspannungsnetzes sowie eine Lastleitung 23 angeschlossen werden können.

Beim Unterputz-Gerätesockel 3 kann es sich beispielsweise handeln
- um einen "Relaiseinsatz" zum Schalten eines elektrischen Verbrauchers, beispielsweise einer Leuchte, oder
- um einen "Dimmereinsatz" zum Dimmen eines elektrischen Verbrauchers, beispielsweise einer Leuchte, oder
- um einen "Jalousieeinsatz" zum Steuern eines Jalousie- oder Rolladenantriebes.

In Fig. 2 ist eine Sicht auf ein WLAN-fähiges Unterputz-Elektro-Installationsgerät dargestellt. Es sind die Zentralscheibe 11 mit einem beispielsweise in Form einer Wippe oder eines Tasters ausgebildeten Bedienteil 13 und der Abdeckrahmen 17 des WLAN-fähigen Unterputz-Elektro-Installationsgeräts 1 zu erkennen. Das Bedienteil 13 kann auch in Form einer Sensoreinheit mit berührungsempfindlichem Bildschirm, beispielsweise mit kapazitivem oder resistivem Touchscreen oder in Form einer Zentralscheibe mit Mikroschaltern ausgebildet sein. Des Weiteren ist an Stelle der üblichen Zentralscheibe/Abdeckrahmen-Konfiguration auch eine Abdeckung "aus einem Stück" realisierbar, welche die UP-Gerätedose rahmenlos abdeckt.

In Fig. 3 ist eine Skizze zur Erläuterung der elektrischen Funktion des Systems "WLAN-fähiges Unterputz-Elektro-Installationsgerät + Smartphone / Smartpad / Tablet-PC + elektrischer Verbraucher" dargestellt. Der Aktor 6 des Unterputz-Gerätesockels 3 ist über seinen Spannungs- und Verbraucheranschlussblock 7 mit der zu einem anzusteuernden elektrischen Verbraucher 25, wie einer Leuchte oder einer Jalousie, führenden Lastleitung 23 sowie mit dem Phasenleiter 21 und dem Nulleiter 22 eines 230V-Wechselspannungsnetzes 24 verbunden. Der Verbraucher 25 liegt andererseits am Nulleiter 22 dieses 230V-Wechselspannungsnetzes 24.

Die Zentralscheibe 11 des WLAN-fähigen Elektro-Installationsgerätes 1 weist eine Ansteuer-/Verarbeitungs-/Speichereinrichtung 12 auf, welche einerseits über die elektrische Kontaktierungsvorrichtung 9 mit dem Aktor 6 sowie dem Netzteil 8 verbunden ist und an welche andererseits das Bedienteil 13 sowie ein WLAN-FunkSender/Empfänger 14 angeschlossen sind. Der WLAN-Funk-Sender/Empfänger 14 ist mit einer ebenfalls in der Zentralscheibe 11 angeordneten Funk-Antenne 15 verbunden. Auf diese Weise ist eine Kommunikation zwischen dem WLAN-fähigen Elektro-Installationsgerät 1 einerseits und einem Smartphone / Smartpad / Tablet-PC 27 andererseits via Funk möglich.

Die Erfindung ermöglicht vorteilhaft den Ersatz eines vorhandenen Schalters (Lichtschalters) oder Dimmers oder Jalousieschalters durch das vorgeschlagene WLAN-fähige Unterputz-Elektro-Installationsgerät 1. Der Installateur tauscht den vorhandenen Schalter oder Dimmer oder Jalousieschalter durch den Unterputz-Gerätesockel 3 aus. Anschließend erfolgt die Montage der Zentralscheibe 11 durch einfaches Aufstecken auf den Unterputz-Gerätesockel 3. Die elektrische und datentechnische Kontaktierung erfolgt über die Kontaktierungsvorrichtung 9, die z. B. als 10-poliges Stecker-Buchsen-System ausgebildet ist.

Vorteilhaft bleibt (optional) die händische Vorort-Bedienbarkeit des Unterputz-Elektro-Installationsgeräts 1 durch den Endkunden durch Betätigung des Bedienteils 13 wie beim ursprünglich eingebauten "normalen" Schalter erhalten, z. B. wird das Licht (respektive eine Leuchte als elektrischer Verbraucher 25) durch Betätigung der Wippe respektive des Bedienteils 13 eingeschaltet / ausgeschaltet:
- das Bedienteil 13 wird betätigt und beaufschlagt die Ansteuer-/Verarbeitungs-/Speichereinrichtung 12,
- die Ansteuer-/Verarbeitungs-/Speichereinrichtung 12 beaufschlagt dementsprechend den Aktor 6 über die elektrische Kontaktierungsvorrichtung 9,
- der Aktor 6 schaltet die Spannung des Phasenleiters 21 auf die Lastleitung 23, d. h. dem Verbraucher 25 liegt die Spannung des 230V-Wechselspannungsnetzes 24 an.

Neben dieser händischen Vorort-Bedienbarkeit ermöglicht das WLAN-fähige Unterputz-Elektro-Installationsgerät 1 als weitere Funktion die ferngesteuerte Ansteuerbarkeit von elektrischen Verbrauchern 25 über das Smartphone / Smartpad / Tablet-PC des Endkunden. Der Endkunde installiert eine spezielle Applikation (Anwendungssoftware) APP auf seinem Smartphone / Smartpad / Tablet-PC 27 (Download). Alle WLAN-fähigen Unterputz-Elektro-Installationsgeräte 1 eines Gebäudes / einer Wohnung werden automatisch in einem Listenmenü dieser APP aufgelistet. Anschließend erfolgt ein automatisches Anlernen der WLAN-fähigen Unterputz-Elektro-Installationsgeräte 1 in der Applikation APP. Die Funktionen "Schalten" oder "Dimmen" oder "Jalousie" werden bei diesem Anlernvorgang einer Zentralscheibe 11 mit dem Smartphone / Smartpad / Tablet-PC 27 mit übertragen, d. h. die Funktion der Touchfläche im Smartphone / Smartpad / Tablet-PC 27 wird automatisch in Abhängigkeit der zu steuernden Funktion festgelegt bzw. von der Applikation APP vorgegeben. Wird beispielsweise ein WLAN-fähiges Unterputz-Elektro-Installationsgerät 1 mit Dimmfunktion am Smartphone / Smartpad / Tablet-PC 27 angelernt, so wird in der Applikation APP auf dem Display des Smartphones / Smartpads / Tablet-PCs 27 ein Slider (virtueller Schieberegler) für die Dimmfunktion eingeblendet.

Während der Anlernphase ist ein Umbenennen der Funktion respektive IP-Adresse in einen "User-friendly-name" (mit eigener Namensgebung) möglich. Des Weiteren ist die Erstellung leerer Container in der Applikation APP auf dem Smartphone / Smartpad / Tablet-PC 27 möglich, um auf diese Art beispielsweise Raumstrukturen anzulegen. Anschließend können die gewünschten Funktionen in den definierten Räumen durch Verschieben einsortiert werden.

Ferner ist ein Kopieren und Gruppieren der Funktionen in der Applikation APP auf dem Smartphone / Smartpad / Tablet-PC 27 möglich:
- Kopie erstellen und zum Gruppieren X Funktionen aufeinander ziehen;
- Container kann umbenannt werden, z. B. Szene, in dem X Funktionen liegen;
- Jede Funktion im Container kann individuell, z. B. in ihrem Helligkeitswert, eingestellt werden.

Der Endkunde kann somit eigenständig Raumstrukturen und höhere Funktionen ohne Installationsaufwand einrichten, wie:
- eigene Bildung von Gruppenbefehlen/Zentralbefehlen, z. B. werden mit einem Gruppenbefehl mehrere Leuchten gleichzeitig ein- oder ausgeschaltet; mit einem Zentralbefehl werden mehrere ausgewählte Jalousien des Gebäudes gleichzeitig angesteuert;
- eigene Bildung von Szenen respektive Lichtszenen mit der Möglichkeit, diese zu einem späteren Zeitpunkt verändern / anpassen zu können, z. B. gleichzeitiges Dimmen unterschiedlicher Leuchten in unterschiedlicher Weise oder sukzessiv aufeinanderfolgendes Dimmen unterschiedlicher Leuchten in unterschiedlicher, festgelegter Weise.

Durch Betätigung des Smartphones / Smartpads / Tablet-PCs 27 kann der Endkunde nunmehr die elektrischen Verbraucher 25 in gewünschter Weise ansteuern, d. h. beispielsweise, dass das Licht (respektive eine Leuchte als elektrischer Verbraucher 25) durch entsprechende Beaufschlagung des Smartphones / Smartpads / Tablet-PCs 27 eingeschaltet / ausgeschaltet werden kann:
- der Endkunde betätigt das Smartphone / Smartpad / Tablet-PC 27 in gewünschter Weise, worauf ein Funksignal vom Smartphone / Smartpad / Tablet-PC 27 an das angewählte / angesteuerte WLAN-fähige Unterputz-Elektro-Installationsgerät 1 abgesetzt und dort via Funk-Antenne 15 und WLAN-FunkSender/Empfänger 14 empfangen wird,
- der WLAN-Funk-Sender/Empfänger 14 beaufschlagt die Ansteuer-/Verarbeitungs-/Speichereinrichtung 12,
- die Ansteuer-/Verarbeitungs-/Speichereinrichtung 12 beaufschlagt dementsprechend den Aktor 6 über die elektrische Kontaktierungsvorrichtung 9,
- der Aktor 6 schaltet die Spannung des Phasenleiters 21 auf die Lastleitung 23, d. h. dem Verbraucher 25 liegt die Spannung des 230V-Wechselspannungsnetzes 24 an.

### Bezugszeichenliste

- 1: WLAN-fähiges Unterputz-Elektro-Installationsgerät
- 2: -
- 3: Unterputz-Gerätesockel (Elektronikeinsatz)
- 4: Tragring
- 5: Spreizen
- 6: Aktor (Relais, Dimmer)
- 7: Spannungs- und Verbraucheranschlussblock
- 8: Netzteil
- 9: elektrische Kontaktierungsvorrichtung
- 10: -
- 11: Zentralscheibe
- 12: Ansteuer-/Verarbeitungs-/Speichereinrichtung
- 13: Bedienteil (Wippe, Taster, berührungsempfindlicher Bildschirm)
- 14: WLAN-Funk-Sender/Empfänger
- 15: Funk-Antenne
- 16: -
- 17: Abdeckrahmen
- 18: -
- 19: UP-Gerätedose
- 20: Wand
- 21: Phasenleiter eines 230V-Wechselspannungsnetzes
- 22: Nulleiter
- 23: Lastleitung zum Verbraucher
- 24: 230V-Wechselspannungsnetz
- 25: anzusteuernder elektrischer Verbraucher (Leuchte, Jalousie)
- 26: -
- 27: Smartphone / Smartpad / Tablet-PC

## Patentansprüche

1. System mit Smartphone/Smartpad/Tablet-PC (27) und WLAN-fähigen Unterputz-Elektro-Installationsgerät (1) mit einem Unterputz-Gerätesockel (3) inklusive eines Spannungs- und Verbraucheranschlussblocks (7) für die Verbindung mit einem 230V-Wechselspannungsnetz (24) und mit einem anzusteuernden elektrischen Verbraucher (25) und mit einer Abdeckung inklusive Bedienteil (13) zur händischen Ansteuerung des elektrischen Verbrauchers (25),
• wobei eine Ansteuer-Nerarbeitungs-/Speichereinrichtung (12), ein WLAN-FunkSender/Empfänger (14) und eine Funk-Antenne (15) integriert sind,
• wobei im Unterputz-Gerätesockel (3) ein Aktor (6) zur Ansteuerung des elektrischen Verbrauchers (25) und ein Netzteil (8) zur Energieversorgung der Ansteuer-Nerarbeitungs-/Speichereinrichtung (12) und des WLAN-FunkSender/Empfängers (14) integriert sind,
• wobei der Unterputz-Gerätesockel (3) und die Ansteuer-/Verarbeitungs-/Speichereinrichtung (12) über ein mehrpoliges Stecker/Buchsensystem als elektrische Kontaktierungsvorrichtung (9) miteinander verbunden sind,
• wobei eine ferngesteuerte Ansteuerung des elektrischen Verbrauchers (25) über das Smartphone / Smartpad / Tablet-PC (27) mit installierter Applikation über eine Funk-Verbindung zum WLAN-Funk-Sender/Empfänger (14) geschaffen ist, und das Unterputz-Elektro-Installationsgerät (1) automatisch in einem Listenmenü der Applikation aufgelistet ist, wobei die Funktionen des Verbrauchers (25) auf der Touchfläche im Smartphone / Smartpad / Tablet-PC (27) automatisch festgelegt oder von der Applikation vorgegeben sind.

2. System mit Smartphone/Smartpad/Tablet-PC und WLAN-fähigen Unterputz-Elektro-Installationsgerät (1) nach Anspruch 1, **gekennzeichnet durch** ein Relais als Aktor (6).

3. System mit Smartphone/Smartpad/Tablet-PC und WLAN-fähigen Elektro-Installationsgerät (1) nach Anspruch 1, **gekennzeichnet durch** einen Dimmer als Aktor (6).

4. System mit Smartphone/Smartpad/Tablet-PC und WLAN-fähigen Unterputz-Elektro-Installationsgerät (1) nach Anspruch 1, **gekennzeichnet durch** eine Wippe als Bedienteil (13).

5. System mit Smartphone/Smartpad/Tablet-PC und WLAN-fähigen Unterputz-Elektro-Installationsgerät (1) nach Anspruch 1, **gekennzeichnet durch** einen Taster als Bedienteil (13).

6. System mit Smartphone/Smartpad/Tablet-PC und WLAN-fähigen Unterputz-Elektro-Installationsgerät (1) nach Anspruch 1, **gekennzeichnet durch** einen berührungsempfindlichen Bildschirm als Bedienteil (13).

7. System mit Smartphone/Smartpad/Tablet-PC und WLAN-fähigen Unterputz-Elektro-Installationsgerät (1) nach Anspruch 1, **dadurch gekennzeichnet, dass** im Smartphone / Smartpad / Tablet-PC (27) eine eigene Namensgebung der Funktionen Schalten und/oder Dimmen des elektrischen Verbrauchers (25) sowie Raumstrukturen, Gruppen-/Zentralbefehle zum Schalten mehrerer Verbraucher (25) und/oder von veränderbaren Szenen respektive Lichtszenen anlegbar sind.

8. System mit Smartphone/Smartpad/Tablet-PC und WLAN-fähigen Unterputz-Elektro-Installationsgerät (1) nach einem der vorstehenden Ansprüche, **dadurch gekennzeichnet, dass** die Abdeckung in Form einer Zentralscheibe (11) mit einem Abdeckrahmen (17) ausgeführt ist.

## Claims

1. System having smart phone/smart pad/tablet PC (27) and WLAN-enabled flush-mounted electrical installation device (1) having a flush-mounted device base (3) including a voltage and load connecting block (7) for connection to a 230 V AC network (24) and having an electrical load (25) to be actuated and having a cover including an operating part (13) for manual actuation of the electrical load (25),
• wherein an actuating/processing/storage device (12), a WLAN wireless transmitter/receiver (14) and a wireless antenna (15) are integrated,
• wherein an actuator (6) for actuating the electrical load (25) and a power supply (8) for supplying energy to the actuating/processing/storage device (12) and to the WLAN wireless transmitter/receiver (14) are integrated in the flush-mounted device base (3),
• wherein the flush-mounted device base (3) and the actuating/processing/storage device (12) are connected to one another by means of a multi-pin plug/socket system as electrical connecting device (9),
• wherein a remote-controlled actuation of the electrical load (25) by means of the smart phone/smart pad/tablet PC (27) with installed application is effected by a wireless connection to the WLAN wireless transmitter/receiver (14), and the flush-mounted electrical installation device (1) is automatically listed in a list menu of the application, wherein the functions of the load (25) are automatically defined on the touch surface on the smart phone/smart pad/tablet PC (27) or specified by the application.

2. System having smart phone/smart pad/tablet PC and WLAN-enabled flush-mounted electrical installation device (1) according to Claim 1, **characterized by** a relay as actuator (6).

3. System having smart phone/smart pad/tablet PC and WLAN-enabled flush-mounted electrical installation device (1) according to Claim 1, **characterized by** a dimmer as actuator (6).

4. System having smart phone/smart pad/tablet PC and WLAN-enabled flush-mounted electrical installation device (1) according to Claim 1, **characterized by** a rocker as operating part (13).

5. System having smart phone/smart pad/tablet PC and WLAN-enabled flush-mounted electrical installation device (1) according to Claim 1, **characterized by** a pushbutton as operating part (13).

6. System having smart phone/smart pad/tablet PC and WLAN-enabled flush-mounted electrical installation device (1) according to Claim 1, **characterized by** a touch-sensitive screen as operating part (13).

7. System having smart phone/smart pad/tablet PC and WLAN-enabled flush-mounted electrical installation device (1) according to Claim 1, **characterized in that**, on the smart phone/smart pad/tablet PC (27), the end user can assign his own nomenclature to the switch and/or dim functions of the electrical load (25) and can create room structures, group/central commands for switching multiple loads (25) and/or variable scenes or lighting scenes.

8. System having smart phone/smart pad/tablet PC and WLAN-enabled flush-mounted electrical installation device (1) according to one of the preceding claims, **characterized in that** the cover is designed in the form of a central plate (11) with a cover frame (17).

## Revendications

1. Système comportant un téléphone intelligent/une tablette intelligente/une tablette-PC (27) et appareil d'installation électrique encastré à fonctionnement WLAN (1) comportant un socle d'appareil encastré (3) muni d'un bloc de raccordement de tension et de charge (7) destiné à permettre une connexion à un réseau de tension alternative à 230 V (24) et comportant une charge électrique à commander (25) et un capot muni d'une partie de commande (13) destinée à commander à la main la charge électrique (25),
- dans lequel un dispositif de commande/traitement/stockage (12), un émetteur/récepteur radio WLAN (14) et une antenne radio (15) sont intégrés,
- dans lequel un actionneur (6) destiné à commander la charge électrique (25) et un bloc d'alimentation (8) destiné à alimenter en énergie le dispositif de commande/traitement/stockage (12) et l'émetteur/récepteur radio WLAN (14) sont intégrés dans le socle d'appareil encastré (3),
- dans lequel le socle d'appareil encastré (3) et le dispositif de commande/traitement/stockage (12) sont connectés l'un à l'autre par l'intermédiaire d'un système de connecteur/douille multipolaire en tant que dispositif de mise en contact électrique (9),
- dans lequel une commande à distance de la charge électrique (25) est effectuée par l'intermédiaire du téléphone intelligent/de la tablette intelligente/de la tablette-PC (27) muni d'une application installée par l'intermédiaire d'une liaison radio avec l'émetteur/récepteur radio WLAN (14), et l'appareil d'installation électrique encastré (1) est automatiquement indiqué dans une liste d'un menu déroulant de l'application, dans lequel les fonctions de la charge (25) sont établies automatiquement ou sont prédéterminées par l'application dans le téléphone intelligent/la tablette intelligente/la tablette-PC (27) sur la surface tactile.

2. Système comportant un téléphone intelligent/une tablette intelligente/une tablette-PC et appareil d'installation électrique encastré à fonctionnalité WLAN (1) selon la revendication 1, **caractérisés par** un relais en tant qu'actionneur (6).

3. Système comportant un téléphone intelligent/une tablette intelligente/une tablette-PC et appareil d'installation électrique encastré à fonctionnalité WLAN (1) selon la revendication 1, **caractérisés par** un gradateur en tant qu'actionneur (6).

4. Système comportant un téléphone intelligent/une tablette intelligente/une tablette-PC et appareil d'installation électrique encastré à fonctionnalité WLAN (1) selon la revendication 1, **caractérisés par** une bascule en tant que partie de commande (13).

5. Système comportant un téléphone intelligent/une tablette intelligente/une tablette-PC et appareil d'installation électrique encastré à fonctionnalité WLAN (1) selon la revendication 1, **caractérisés par** un clavier en tant que partie de commande (13).

6. Système comportant un téléphone intelligent/une tablette intelligente/une tablette-PC et appareil d'installation électrique encastré à fonctionnalité WLAN (1) selon la revendication 1, **caractérisés par** un écran tactile en tant que partie de commande (13).

7. Système comportant un téléphone intelligent/une tablette intelligente/une tablette-PC et appareil d'installation électrique encastré à fonctionnalité WLAN (1) selon la revendication 1, **caractérisés en ce qu'**une dénomination propre des fonctions, des connexions et/ou des gradations de la charge électrique (25) ainsi que des structures spatiales, des instructions groupées/centralisées destinées à connecter plusieurs charges (25) et/ou des scènes modifiables de scènes lumineuses respectives, peuvent être stockées dans le téléphone intelligent/la tablette intelligente/la tablette-PC (27).

8. Système comportant un téléphone intelligent/une tablette intelligente/une tablette-PC et appareil d'installation électrique encastré à fonctionnalité WLAN (1) selon l'une quelconque des revendications précédentes, **caractérisés en ce que** le capot est réalisé sous la forme d'une plaque centrale (11) munie d'un cadre de capot (17).
